# FASCICULE DE BREVET EUROPEEN

(11) **EP 4 094 004 B1**
(45) Date de publication et mention de la délivrance du brevet: **29.11.2023**
(21) Numéro de dépôt: 21700773.1
(22) Date de dépôt: 18.01.2021
(51) Int. Cl.: F16L 53/38, H01C 17/065, B29L 31/34, F16L 53/35

(54) **COQUE CHAUFFANTE POUR RACCORD TROIS VOIES ET PROCEDE DE FABRICATION**
DREIWEGE-HEIZHÜLLE UND HERSTELLUNGSVERFAHREN
THREE-WAY HEATING SHELL AND METHOD OF MANUFACTURING

(30) Priorité: 20.01.2020 FR 2000532; 16.10.2020 FR 2010638
(43) Date de publication de la demande: 30.11.2022
(73) Titulaire: HUTCHINSON, 75008 Paris (FR)
(72) Inventeur: ASTAFYEVA, Ksenia, 45200 MONTARGIS (FR); BENARD, Thierry, 45430 CHECY (FR)
(74) Mandataire: Gevers & Orès
(86) Numéro de dépôt international: PCT/EP2021/050965
(87) Numéro de publication internationale: WO 2021/148358

(56) Documents cités:
- EP-A1- 2 222 995
- EP-A1- 2 363 627
- EP-A1- 2 892 743
- DE-U1-202007 007 849
- FR-A1- 2 516 439
- US-A1- 2016 223 116
- "Dreidimensionale Schaltungen LPKF-LDS: Laser-Direktstrukturierung f?r 3D-Schaltungstr?ger", , 8 septembre 2014 (2014-09-08), XP055138605, Extrait de l'Internet: URL:http://www.lpkf.de/_mediafiles/1963-lp kf-lds-prozess.pdf [extrait le 2014-09-08]

## Description

### Domaine technique de l'invention

La présente invention concerne notamment une coque chauffante pour raccord trois voies, en particulier pour un circuit de fluide de véhicule automobile.

### Arrière-plan technique

Un circuit de fluide d'un véhicule automobile peut comprendre des moyens de chauffage du fluide afin d'éviter que la température de ce fluide descende en dessous d'un certain seuil, ce qui pourrait entraîner un dysfonctionnement du circuit et du véhicule.

C'est par exemple le cas d'un circuit de fuite des gaz d'un moteur thermique à combustion interne, pour le passage des gaz de la chambre de combustion au carter du moteur, largement connu sous l'appellation anglaise « blow-by ». Les résidus gazeux de la combustion du moteur qui s'accumulent dans le carter moteur sont réinjectés dans le tuyau d'admission d'air du moteur et peuvent contenir notamment de l'eau.

Par grand froid, cette eau peut givrer et entraîner l'obstruction du tuyau, ce qui peut provoquer en cas d'obstruction totale une augmentation de la pression dans le carter moteur conduisant à une évacuation de l'huile de lubrification contenue dans le carter par les prises de jauge de mesure. Il peut en résulter des dommages importants pour le moteur.

Le circuit de fluide est alors équipé de moyens de chauffage du fluide pour éviter ce problème, comme cela est décrit dans le document FR-A1-2 943 718. Un autre exemple de circuit de fluide équipé de moyens de chauffage est un circuit de dépollution SCR (acronyme de l'anglais *Sélective Catalytic Réduction*), comme décrit dans le document EP-A1-2 363 627.

La solution d'urée destinée à être mélangée aux gaz d'échappement est susceptible de geler et il est donc connu de la chauffer pour garantir le bon fonctionnement du circuit SCR.

En général, le chauffage d'un fluide dans un circuit de fluide d'un véhicule automobile est réalisé au moyen d'un conduit équipé de moyens de chauffage ou d'un dispositif de raccordement fluidique équipé de moyens de chauffage.

Le document FR-A1-2516439 dévoile une coque chauffante comportant un passage interne de même forme, la coque étant formée par deux demi-coques de même forme fixées l'une à l'autre et délimitant entre elles ledit passage, les demi-coques comportant des surfaces semi-cylindriques formant des portions dudit passage, et la coque comprenant des circuits résistifs de chauffage qui sont formés sur lesdites surfaces semi-cylindriques.

La présente invention propose un perfectionnement à ces technologies qui peut s'adapter à un circuit de fluide existant et qui ne nécessite donc pas forcément une modification de ce circuit.

### Résumé de l'invention

La présente invention concerne une coque chauffante pour raccord trois voies, en particulier pour un circuit de fluide de véhicule automobile, cette coque ayant une forme générale en T ou Y et comportant un passage interne de même forme dans lequel est destiné à être logé un raccord fluidique trois voies, la coque étant formée par deux demi-coques de même forme fixées l'une à l'autre et délimitant entre elles ledit passage, les demi-coques comportant des surfaces semi-cylindriques formant des portions du passage, caractérisée en ce qu'elle comprend des circuits résistifs de chauffage qui sont formés *in situ* sur lesdites surfaces semi-cylindriques.

L'invention propose ainsi d'intégrer des moyens de chauffage directement dans la coque et non pas dans le raccord fluidique destiné à être logé dans cette coque. La coque peut être réalisée dans un matériau plastique ou composite. La coque peut avoir une fonction de protection mécanique du raccord et/ou une fonction d'isolation, en particulier thermique, du raccord. Dans la présente demande, on entend par « raccord trois voies », tout élément comportant trois voies de circulation de fluide qui communiquent entre elles. Il peut s'agir d'un tuyau, d'un conduit, d'un embout, d'un connecteur, etc.

La coque selon l'invention peut comprendre une ou plusieurs des caractéristiques suivantes, prises isolément les unes des autres ou en combinaison les unes avec les autres :
- chaque circuit comprend au moins une piste résistive de forme allongée dont les extrémités longitudinales sont reliées à des bornes de raccordement électrique ;
- la piste résistive forme un serpentin ;
   -- la piste résistive a une largeur inférieure ou égale à 5mm, et par exemple inférieure ou égale à 1mm ;
   -- la piste résistive a une épaisseur inférieure ou égale à 0,5 mm ;
   -- les bornes sont soudées aux extrémités de fils électriques ou à des cosses électriques ;
- les bornes ou cosses s'étendent depuis ledit passage, au moins en partie à l'extérieur de ce passage ;
- les bornes ou cosses sont entièrement situées à l'extérieur dudit passage ;
- chaque demi-coque comporte au moins une, et de préférence au moins deux, circuit(s) résistif(s) de chauffage dont les bornes de raccordement sont indépendantes ;
- chaque demi-coque comprend trois surfaces semi-cylindriques, un premier circuit résistif de chauffage s'étendant sur des première et seconde des surfaces semi-cylindriques, et un second circuit résistif de chauffage s'étendant sur la seconde et une troisième des surfaces semi-cylindriques ;
- une borne de raccordement est située sur chacune des première et troisième surfaces en vue du raccordement électrique des extrémités des pistes des premier et second circuits situés sur ces surfaces, et deux bornes de raccordement sont situées sur ladite seconde surface en vue du raccordement électrique des extrémités des pistes des premier et second circuits situés sur cette surface ;
- les bornes de raccordement sont reliées aux pistes par des extensions de ces pistes qui s'étendent à l'extérieur desdites surfaces semi-cylindriques ;
- les bornes de raccordement sont situées sur deux faces parallèles opposées de pattes de chaque demi-coque ;
- les circuits s'étendent sur des surfaces semi-cylindriques internes ou concaves, ou bien à la fois des surfaces semi-cylindriques internes ou concaves et des surfaces semi-cylindriques externes ou convexes ;
- chaque demi-coque est enrobée par un revêtement d'étanchéité en matériau diélectrique, qui recouvre au moins partiellement lesdits circuits ;
- ledit revêtement recouvre l'intégralité de la demi-coque à l'exception desdites bornes ;
- ledit revêtement forme des manchons tubulaires autour de chacune desdites bornes ;
- chaque demi-coque comporte au moins un élément en saillie configuré pour coopérer avec une paroi d'un moule pour garantir un positionnement de la demi-coque lors d'une injection du matériau diélectrique dans le moule ;
   -- les circuits sont configurés pour fournir une puissance thermique comprise entre 0,5 et 10W.

La présente invention concerne également un circuit de fluide, en particulier pour un véhicule automobile, comportant au moins une coque tel que décrit ci-dessus. Il s'agit par exemple d'un circuit SCR.

La présente invention concerne également un procédé de fabrication d'une coque telle que décrit ci-dessus, dans lequel il comprend une étape (a) de réalisation des circuits par une technique choisie parmi l'impression d'une encre résistive ou conductrice et la métallisation sélective.

Une encre résistive est souvent une encre avec une charge semi-conductrice (de type carbone). Ce serait aussi possible de réaliser une piste résistive avec une encre conductrice (chargée du métal) en adaptant par exemple les dimensions de la piste.

La métallisation sélective peut être réalisée par laser puis immersion dans un ou plusieurs bains de métallisation (dépôt électrolytique ou non électrolytique). Le laser peut être utilisé pour réaliser une modification chimique de la surface traitée et/ou pour augmenter la rugosité de cette surface.

Le matériau de la coque peut comporter un additif destiné à être activé par laser et à faciliter l'accroche d'une ou plusieurs couches de métal lors de l'immersion ou des immersions successives.

La coque peut être réalisée par injection bi-matière dans un moule, d'une première matière ayant une affinité avec un matériau électroconducteur et résistif, et d'une seconde matière non électroconductrice.

L'encre peut être imprimée par jet d'encre, jet d'aérosol, tamponnage, ou toute autre technique adaptée.

Avantageusement, l'étape (a) est suivie d'une étape (b) d'enrobage de chaque demi-coque avec un revêtement d'étanchéité en matériau diélectrique, qui recouvre au moins partiellement lesdits circuits.

Cette étape (b) d'enrobage est de préférence réalisée par injection du matériau diélectrique dans un moule à l'intérieur duquel est préalablement disposée chaque demi-coque.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue schématique en perspective d'une coque de raccord trois voies pour un circuit de fluide d'un véhicule automobile, la coque étant ouverte,
[Fig. 2] la figure 2 est une vue schématique en perspective d'une autre coque similaire, cette fois-ci en position fermée,
[Fig. 3] la figure 3 est une vue schématique en perspective d'une demi-coque selon un premier mode de réalisation d'une coque selon l'invention,
[Fig. 4] la figure 4 est une vue schématique en perspective du premier mode de réalisation de la coque, en position fermée,
[Fig. 5] la figure 5 est une vue schématique en perspective d'une demi-coque selon un second mode de réalisation d'une coque selon l'invention,
[Fig. 6] la figure 6 est une vue schématique en perspective de circuits résistifs de chauffage de la demi-coque de la figure 5,
[Fig. 7] la figure 7 est une vue schématique en perspective d'une demi-coque selon un troisième mode de réalisation d'une coque selon l'invention,
[Fig. 8] la figure 8 est une vue schématique en perspective de circuits résistifs de chauffage de la demi-coque de la figure 7,
[Fig. 9a-9f] Les figures 9a à 9f sont des vues très schématiques d'une demi-coque plastique injectée en cours de métallisation, et illustre un procédé de métallisation par LDS,
[Fig. 10] la figure 10 est une vue schématique en perspective d'une partie d'un circuit de fluide comportant notamment une coque chauffante selon une variante de réalisation de l'invention, qui renferme un raccord fluidique connecté à trois conduites de fluide,
[Fig. 11] la figure 11 est une vue schématique en coupe du circuit de la figure 10,
[Fig. 12] la figure 12 est une vue schématique en perspective d'une des demi-coques de la coque de la figure 10, sans ses circuits et son enrobage,
[Fig. 13] la figure 13 est une autre vue schématique en perspective d'une des demi-coques de la coque de la figure 10, sans ses circuits et son enrobage,
[Fig. 14] la figure 14 est une vue similaire à celle de la figure 12 et montrant la demi-coque avec ses circuits mais sans son enrobage,
[Fig. 15] la figure 15 est une vue similaire à celle de la figure 13 et montrant la demi-coque avec ses circuits mais sans son enrobage,
[Fig. 16] la figure 16 est une vue similaire à celle de la figure 14 mais avec une variante de réalisation des circuits,
[Fig. 17] la figure 17 est une vue similaire à celle de la figure 13 mais avec une variante de réalisation des circuits, et
[Fig. 18] la figure 18 est une vue schématique en perspective d'une des demi-coques de la coque de la figure 13, avec ses circuits et son enrobage.

### Description détaillée de l'invention

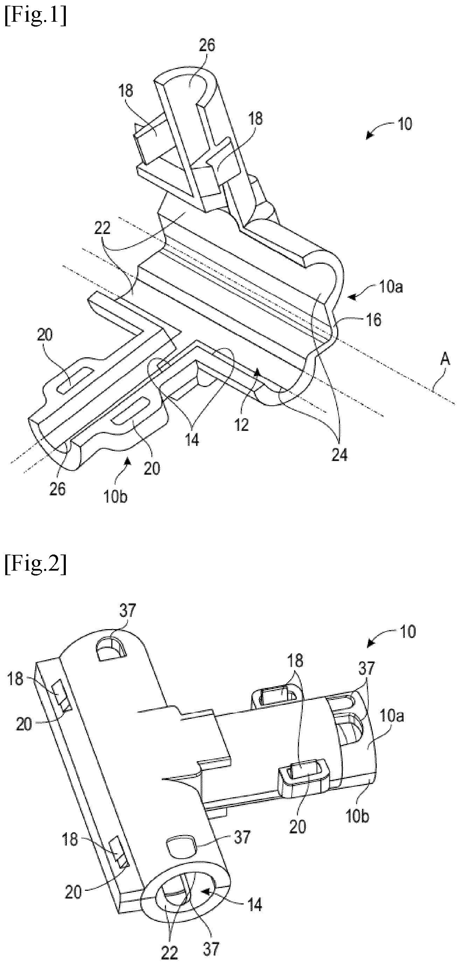

La figure 1 montre une coque 10 de raccord trois voies 12 pour un circuit de fluide d'un véhicule automobile. Le circuit de fluide peut être un circuit d'alimentation de carburant, un circuit de climatisation, un circuit de frein à vide, un circuit SCR, etc.

Le raccord trois voies 12 est représenté très schématiquement et a une forme générale en T dans l'exemple représenté. En variante, il pourrait avoir une forme en Y. Classiquement, ce raccord 12 définit trois voies distinctes qui se rejoignent en un même point. Dans le cas où l'une des voies forme une entrée de fluide, on comprend que les deux autres voies forment des sorties de fluide. Dans le cas où deux des voies forment des entrées de fluide, on comprend que la dernière voie forme une sortie de fluide.

Le fluide peut être un gaz ou un liquide. Il s'agit par exemple de carburant, d'un liquide de refroidissement, d'un gaz de fuite d'un moteur thermique à combustion interne, une solution d'urée, etc.

La coque 10 comporte un passage interne 14 en forme de T dans lequel est destiné à être logé le raccord trois voies 12.

La coque 10 est formée par deux demi-coques respectivement supérieure 10a et inférieure 10b. Les demi-coques 10a, 10b ont une forme en T est sont fixées l'une à l'autre pour délimiter entre elles le passage 14.

Dans l'exemple de la figure 1, les demi-coques 10a, 10b sont solidaires l'une de l'autre par un voile de matière 16 ayant une fonction de charnière et définissant donc un axe A de pivotement de la demi-coque 10b vis-à-vis de la demi-coque 10a et inversement. Les demi-coques 10a, 10b sont ainsi rendues inséparables.

Les demi-coques 10a, 10b sont ici fixées l'une à l'autre par un système d'encliquetage élastique comportant plusieurs crochets 18 portés par l'une des demi-coques et configurés pour coopérer avec des fentes 20 ou des évidements complémentaires de l'autre des coques. Cette coopération assure une retenue des demi-coques 10a, 10b l'une par rapport à l'autre.

Les demi-coques comportent des surfaces semi-cylindriques 22, 24, 26 formant des portions du passage 14.

Les surfaces 22, 24 de chaque demi-coque sont coaxiales dans l'exemple représenté et s'étendent l'une à la suite de l'autre. Elles définissent respectivement des portions de passage pour deux des voies. La surface 26 s'étend dans une direction perpendiculaire par rapport aux autres surfaces 22, 24 et est raccordée à ces deux surfaces.

Après fermeture de la coque 10, on comprend que les surfaces 22, 24, 26 définissent entre elles le passage 14 qui a en section transversale une forme générale circulaire.

Dans la variante de la figure 2, les deux demi-coques 10a, 10b sont indépendantes dans la mesure où elles ne sont pas reliées par un voile de matière. Elles comprennent davantage de système d'encliquetage élastique pour assurer leur retenue.

La coque 10 et les demi-coques 10a, 10b sont de préférence réalisées dans un matériau plastique ou composite.

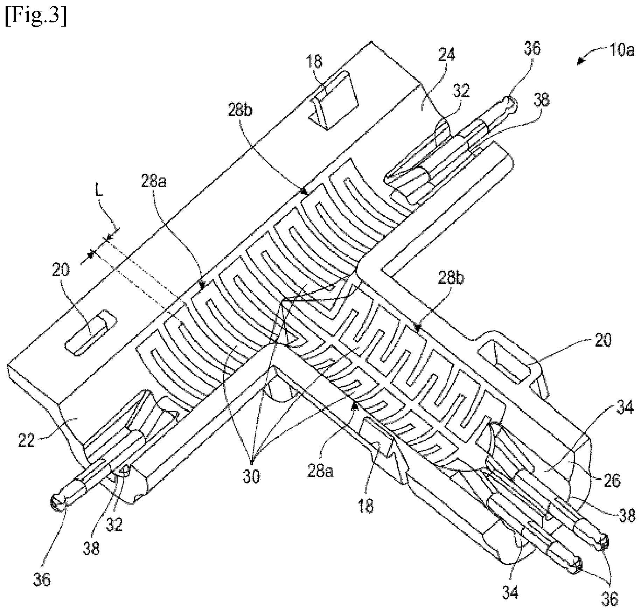

L'invention propose d'équiper une coque 10 de ce type avec des moyens de chauffage et propose plusieurs modes de réalisation représentés aux figures 3 et suivantes. Selon l'invention, ces moyens de chauffage comprennent des circuits résistifs de chauffage qui sont formés *in situ* sur les surfaces semi-cylindriques 22, 24, 26 des demi-coques 10a, 10b.

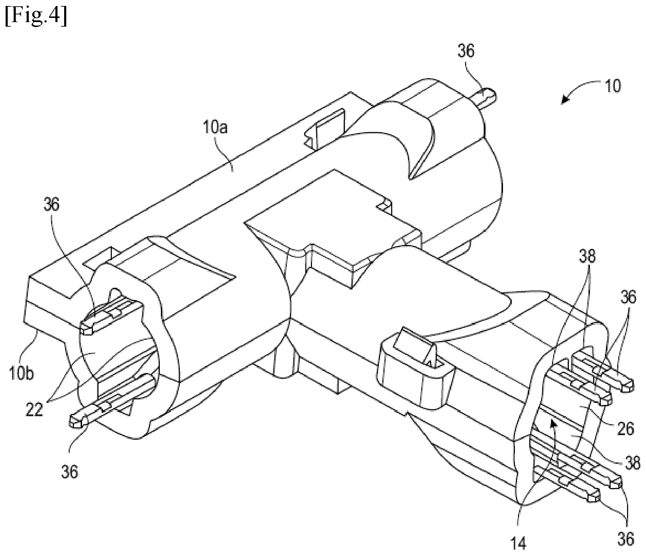

Les figures 3 et 4 illustrent un premier mode de réalisation. La figure 3 montre une demi-coque 10a (les deux demi-coques étant similaires) et la figure 4 montre la coque 10 en position fermée ou assemblée.

Chaque demi-coque 10a, 10b comprend deux circuits résistifs de chauffage 28a, 28b. Les deux circuits 28a, 28b sont indépendants c'est-à-dire qu'ils sont alimentés en électricité de manière indépendante et peuvent fonctionner et donc être contrôlés indépendamment l'un de l'autre.

Chaque circuit 28a, 28b comprend au moins une piste résistive 30 de forme allongée dont les extrémités longitudinales sont reliées à des bornes 32, 34 de raccordement électrique. Comme chaque demi-coque 10a, 10b comprend deux circuits 28a, 28b, chaque demi-coque comprend quatre bornes 32, 34, et donc la coque au complet (avec ses deux demi-coques) comprend huit bornes 32, 34, comme cela est visible à la figure 4.

La figure 3 permet de constater que chaque piste 30 forme un serpentin.

Dans l'exemple représenté, chaque piste 30 a une longueur supérieure ou égale à 30 mm et une largeur L inférieure ou égale à 5mm, et par exemple inférieure ou égale à 1mm. La piste résistive 30 a une épaisseur inférieure ou égale à 0,5 mm.

Les bornes 32, 34 sont ici formées par des cosses électriques 36 rapportés et soudées sur les extrémités des pistes 30. Ces cosses 36 ont ici une forme allongée et sont de préférence logées dans des renfoncements 38 des demi-coques de façon à éviter de gêner le passage 14 pour le montage du raccord trois voies. Le reste des cosses 36 s'étend à l'extérieur du passage 14 et est accessible pour être raccordé à un ou plusieurs connecteurs électriques (figure 4).

En variante, les cosses 36 pourraient traverser des orifices 37 des demi-coques 10a, 10b, tels que ceux représentés à la figure 2.

Le circuit de chauffage 28a, c'est-à-dire une première piste 30, s'étend sur les surfaces 22 et 26, et le second circuit de chauffage 28b, c'est-à-dire une seconde piste 30, s'étend sur les surfaces 24 et 26.

La figure 3 permet de visualiser le fait que la surface 22 comprend uniquement le circuit 28a, la surface 24 comprend uniquement le circuit 28b, et la surface 26 comprend les deux circuits 28a, 28b dont les pistes 30 sont justement conformées et dimensionnées pour qu'elles puissent toutes les deux être situées sur une même surface.

Du fait des formes semi cylindriques des surfaces 22, 24, 26, les pistes 30 ont des formes incurvées.

On constate également que la borne 32 reliée au circuit 28a est située sur la surface 22, la borne 32 reliée au circuit 28b est située sur la surface 24, et que les bornes 34 reliées aux circuits 28a, 28b sont situées sur la surface 26.

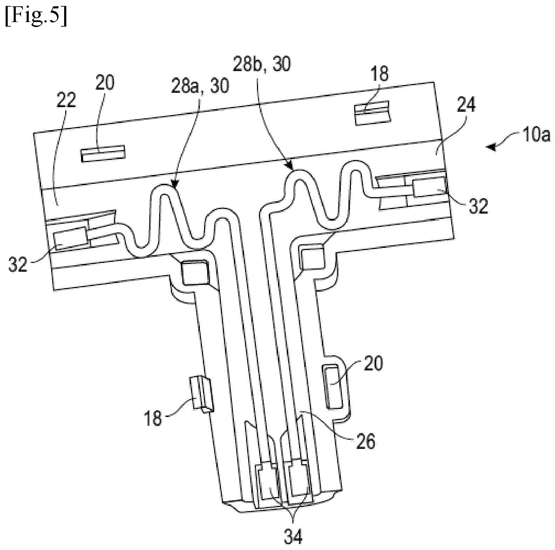

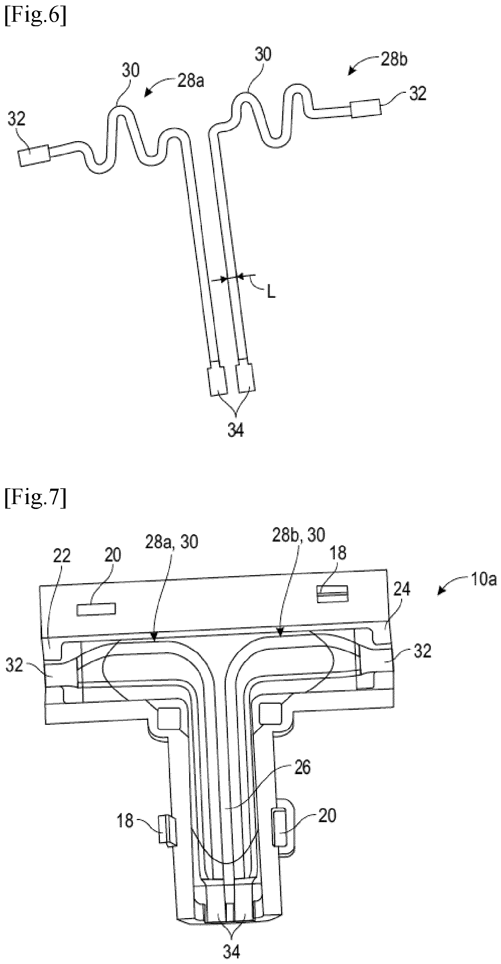

Les figures 5 et 6 illustrent un deuxième mode de réalisation. La figure 5 montre une des demi-coques 10a (les deux demi-coques étant similaires) de la coque chauffante, et la figure 6 montre les circuits résistifs de chauffage 28a, 28b de chaque demi-coque.

Chaque demi-coque comprend deux circuits résistifs de chauffage 28a, 28b. Les deux circuits sont indépendants c'est-à-dire qu'ils sont alimentés en électricité de manière indépendante et peuvent fonctionner et donc être contrôlés indépendamment l'un de l'autre.

Chaque circuit 28a, 28b comprend au moins une piste résistive 30 de forme allongée dont les extrémités longitudinales sont reliées à des bornes 32, 34 de raccordement électrique. Comme chaque demi-coque comprend deux circuits, chaque demi-coque comprend quatre bornes 32, 34 et donc la coque au complet (avec ses deux demi-coques) comprend huit bornes 32, 34.

La figure 6 permet de constater que chaque piste 30 forme un serpentin sur au moins une partie de sa longueur.

Dans l'exemple représenté, chaque piste 30 a une longueur supérieure ou égale à 30 mm et une largeur L inférieure ou égale à 5mm, et par exemple inférieure ou égale à 1mm. La piste résistive 30 a une épaisseur inférieure ou égale à 0,5 mm.

Les bornes 32, 34 sont ici formées par des élargissements des extrémités des pistes 30. Le raccordement électrique des circuits 28a, 28b peut être réalisé par l'intermédiaire de fils conducteurs dont des extrémités longitudinales sont soudées respectivement sur les bornes 32, 34. On comprend donc que les bornes 32, 34 sont avantageusement dimensionnées pour recevoir un point de soudure.

Le circuit de chauffage 28a, c'est-à-dire une première piste 30, s'étend sur les surfaces 22 et 26, et le second circuit de chauffage 28b, c'est-à-dire une seconde piste 30, s'étend sur les surfaces 24 et 26.

La figure 5 permet de visualiser le fait que la surface 22 comprend uniquement le circuit 28a, la surface 24 comprend uniquement le circuit 28b, et la surface 26 comprend les deux circuits 28a, 28b dont les pistes 30 sont rectilignes. Du fait des formes semi cylindriques des surfaces 22, 24, 26, les pistes 30 ont des formes incurvées, en particulier sur les surfaces 22, 24.

On constate également que la borne 32 reliée au circuit 28a est située sur la surface 22, la borne 32 reliée au circuit 28b est située sur la surface 24, et que les bornes 34 reliées aux circuits 28a, 28b sont situées sur la surface 26.

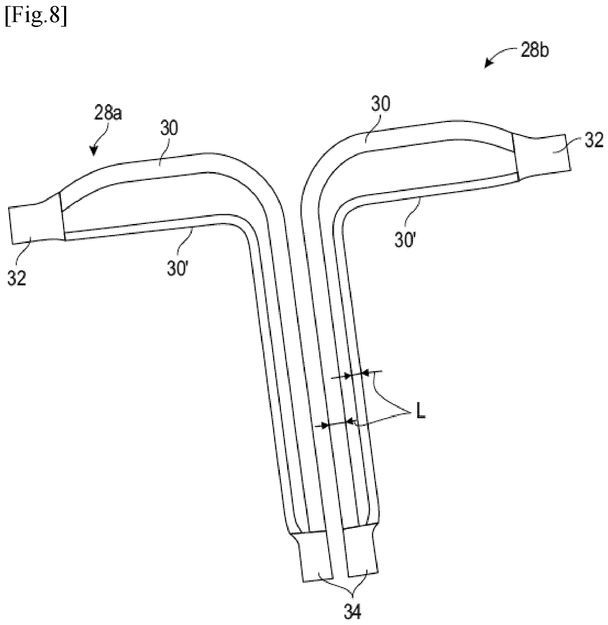

Les figures 7 et 8 illustrent un troisième mode de réalisation. La figure 7 montre une des demi-coques 10a (les deux demi-coques étant similaires) de la coque chauffante, et la figure 8 montre les circuits résistifs de chauffage 28a, 28b de chaque demi-coque.

Chaque demi-coque comprend deux circuits résistifs de chauffage 28a, 28b. Les deux circuits sont indépendants c'est-à-dire qu'ils sont alimentés en électricité de manière indépendante et peuvent fonctionner et donc être contrôlés indépendamment l'un de l'autre.

Chaque circuit 28a, 28b comprend deux pistes résistives 30, 30' de forme allongée dont les extrémités longitudinales sont reliées à des bornes 32, 34 de raccordement électrique. Comme chaque demi-coque comprend deux circuits 28a, 28b, chaque demi-coque comprend quatre bornes 32, 34 et donc la coque au complet (avec ses deux demi-coques) comprend huit bornes 32, 34.

La figure 8 permet de constater que les deux pistes 30, 30' de chaque circuit 28a, 28b ont une forme générale en L et s'étendent parallèlement l'une à l'autre.

Dans l'exemple représenté, chaque piste 30 a une longueur supérieure ou égale à 30 mm et une largeur L inférieure ou égale à 5mm, et par exemple inférieure ou égale à 1mm. La piste résistive 30 a une épaisseur inférieure ou égale à 0,5 mm.

Les bornes 32, 34 sont ici formées par des élargissements des extrémités des pistes 30. Le raccordement électrique des circuits 28a, 28b peut être réalisé par l'intermédiaire de fils conducteurs dont des extrémités longitudinales sont soudées respectivement sur les bornes 32, 34. On comprend donc que les bornes 32, 34 sont avantageusement dimensionnées pour recevoir un point de soudure.

Le circuit de chauffage 28a, c'est-à-dire ses pistes 30, 30' s'étendent sur les surfaces 22 et 26, et le second circuit de chauffage 28b, c'est-à-dire ses pistes 30, 30' s'étendent sur les surfaces 24 et 26.

La figure 7 permet de visualiser le fait que la surface 22 comprend uniquement le circuit 28a, la surface 24 comprend uniquement le circuit 28b, et la surface 26 comprend les deux circuits 28a, 28b dont les pistes sont justement conformées et dimensionnées pour qu'elles puissent toutes les deux être située sur une même surface.

On constate également que la borne 32 reliée au circuit 28a est située sur la surface 22, la borne 32 reliée au circuit 28b est située sur la surface 24, et que les bornes 34 reliées aux circuits 28a, 28b sont situées sur la surface 26.

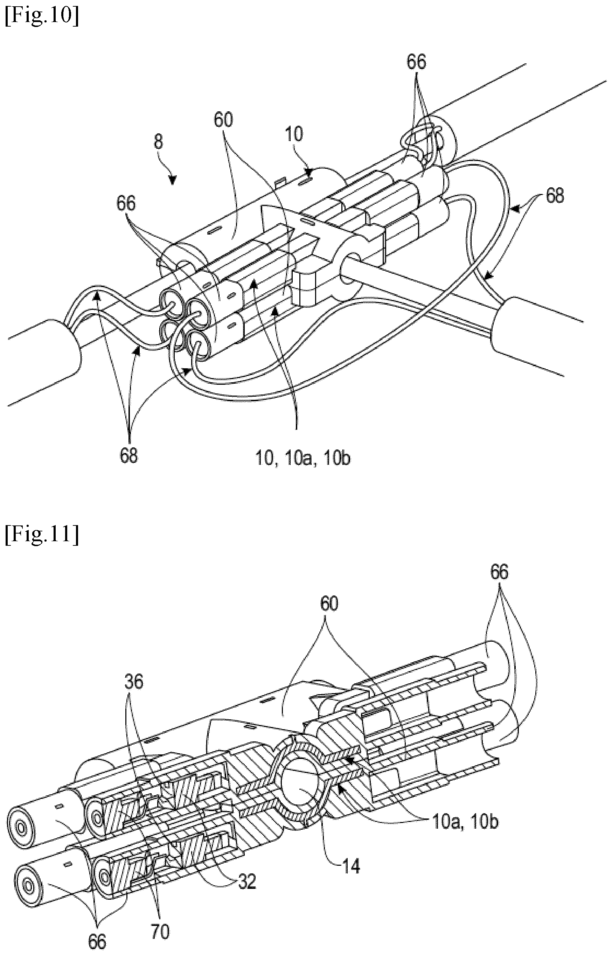

Les figures 10 et suivantes illustrent une autre variante de réalisation de la coque 10 dans laquelle les deux demi-coques 10a, 10b sont enrobées avec un revêtement d'étanchéité 60 réalisé en matériau diélectrique.

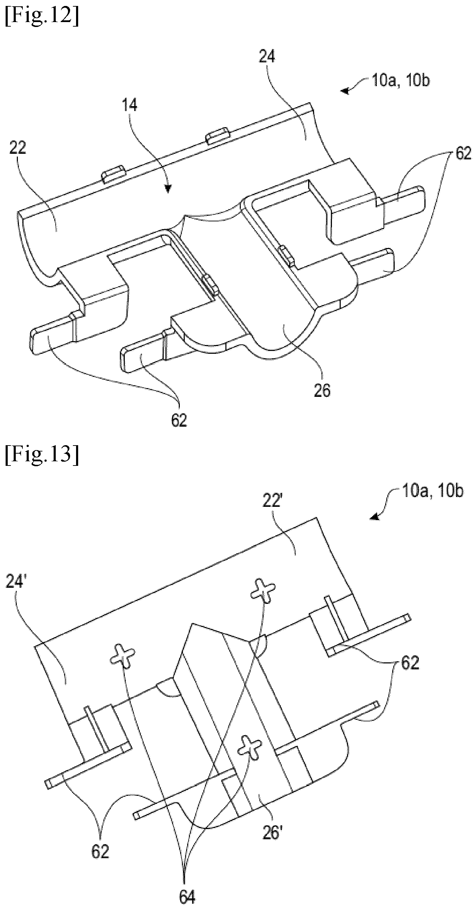

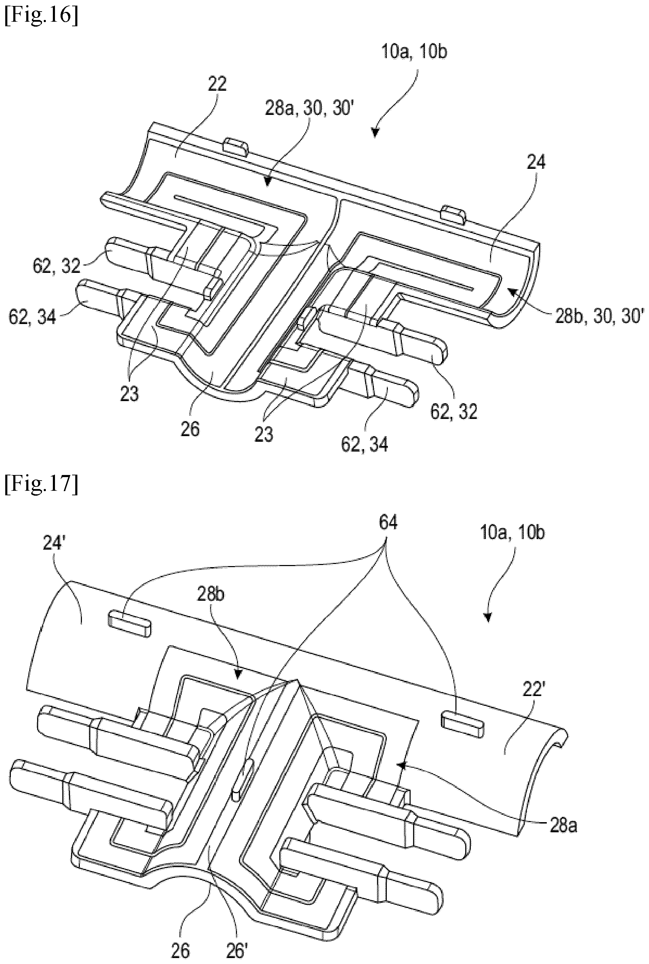

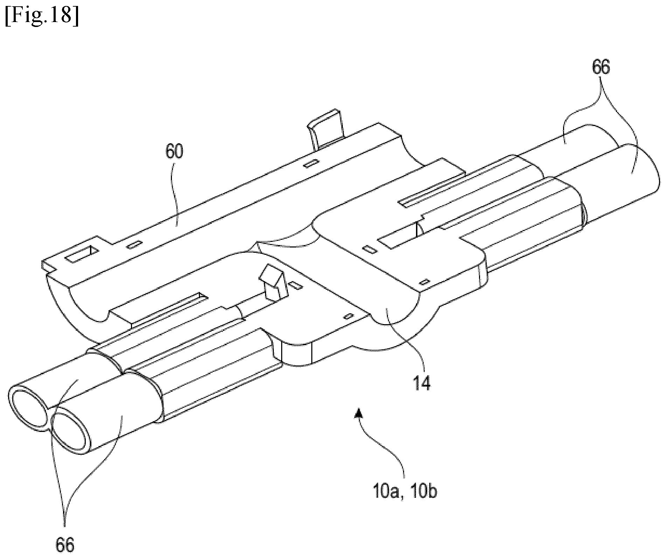

Les figures 10 et 11 montrent la coque 10 en condition d'utilisation dans un circuit de fluide 8, la coque renfermant un raccord trois voies connecté à trois conduites de fluide. Les figures 12 et 13 montrent une demi-coque 10a, 10b sans son revêtement ni ses circuits de chauffage 28a, 28b. Les figures 16 et 17 montrent une demi-coque 10a, 10b équipée de circuits de chauffage 28a, 28b et les figures 18 et 19 montrent une demi-coque 10a, 10b équipée d'une variante de réalisation des circuits de chauffage 28a', 28b'. Enfin, la figure 18 montre une demi-coque 10a, 10b équipée de son revêtement d'étanchéité 60. Les demi-coques 10a, 10b diffèrent de celles décrites dans ce qui précède notamment en ce qu'elles comprennent des pattes 62 situées à l'extérieur du passage 14 et destinées à former des supports pour des bornes électriques 32, 34 de raccordement des circuits résistifs de chauffage 28a, 28b ou 28a', 28b'. Ces bornes sont donc situées à l'extérieur du passage 14.

Dans l'exemple représenté, les pattes 62 s'étendent parallèlement entre elles et à l'axe commun aux surfaces 22, 24. Chacune de ces pattes comprend deux faces parallèles opposées.

La figure 12 montre un côté de chaque demi-coque 10a, 10b et les surfaces semi-cylindriques internes ou concaves 22, 24, 26 qui définissent une partie du passage 14, et la figure 13 montre un côté opposé de la demi-coque et des surfaces semi-cylindriques externes ou convexes 22, 24', 26'. Les surfaces 22', 24', 26' s'étendent coaxialement autour des surfaces 22, 24 et 26, respectivement.

La figure 13 permet en outre de constater que chaque demi-coque 10a, 10b comporte au moins un élément en saillie 64 configuré pour coopérer avec une paroi d'un moule pour garantir un positionnement de la demi-coque lors d'une injection du matériau diélectrique du revêtement 60 dans le moule.

Dans l'exemple représenté, un élément 64 en forme de pion plat ou en croix est situé sur chacune des surfaces 22', 24', 26' et est configuré pour prendre appui sur des parois du moule afin de positionner précisément la demi-coque dans le moule et assurer un jeu précis entre les surfaces 22', 24', 26' et les parois du moule. Ce jeu est destiné à être comblé avec le matériau du revêtement 60 afin de former un enrobage d'épaisseur constante sur ces surfaces. L'intégralité de la demi-coque peut être enrobée de la sorte, à l'exception des bornes 32, 34 qui doivent rester libres pour être connectées électriquement.

La figure 18 montre un exemple de réalisation d'une demi-coque enrobée. Le revêtement 60 a avantageusement deux fonctions. Une première fonction de protection des circuits résistifs 28a, 28b et de leurs pistes, qui sont destinés à être fabriqués *in situ* sur la demi-coque avant son enrobage, et une seconde fonction d'étanchéité du raccordement électrique de ces circuits.

Le revêtement 60 est réalisé en matériau diélectrique. Il est choisi pour avoir une bonne affinité chimique avec le matériau de la coque 10.

Comme cela est visible à la figure 18, ce revêtement 60 forme avantageusement des manchons tubulaires 66 autour de chacune des pattes 62 et donc autour de chacune des bornes 32, 34. Les bornes 32, 34 sont ainsi protégées de l'environnement extérieur, et notamment de l'humidité, et peuvent être raccordées à des fils électriques 68, comme cela est visible à la figure 10. La figure 11 montre une coupe du circuit 8 au niveau de certaines des bornes des demi-coques 10a, 10b. Dans chaque manchon 66 sont montés une cosse 36 de raccordement électrique à la borne 32, 34 correspondante, ainsi qu'un bouchon d'étanchéité 70 destiné à être traversé de manière étanche par un fil 68.

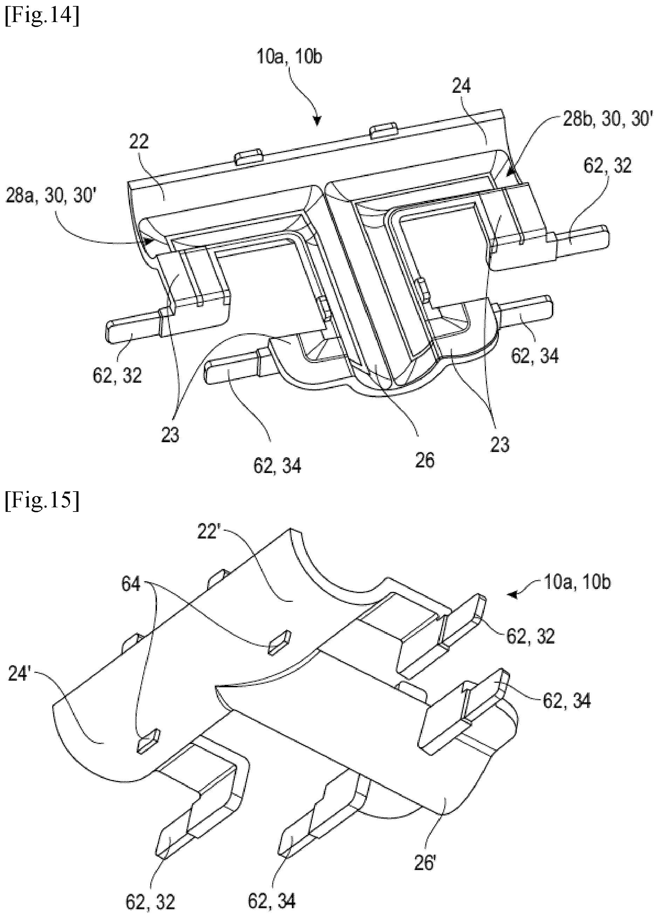

Les figures 14 et 15 montrent un premier mode de réalisation des circuits 28a, 28b qui s'étendent majoritairement sur les surfaces 22, 24, 26 mais qui comprennent des extensions 23 qui s'étendent jusqu'aux pattes 62 et qui sont reliées aux bornes 32, 34 situées sur les deux faces opposées précitées de ces pattes 62.

Les figures 16 et 17 montrent un second mode de réalisation des circuits 28a', 28b' qui s'étendent en partie sur les surfaces 22, 24, 26 et en partie sur les surfaces 22', 24', 26'. Ces circuits 28a', 28b' comprennent des extensions 23 qui s'étendent jusqu'aux pattes 62 et sont reliées aux bornes 32, 34 situées sur les deux faces opposées précitées de ces pattes 62.

Les circuits de chauffage de la coque sont par exemple configurés pour fournir une puissance thermique comprise entre 0,5 et 10W.

Les circuits 28a, 28b peuvent être formés *in situ* de plusieurs manières, et en particulier par une technique de plastronique. La plastronique regroupe l'ensemble des techniques d'impression d'électronique imprimée ou de métallisation sélective sur un substrat rigide en matière plastique ou composite et à trois dimensions, et est également connue sous la dénomination MID (qui est l'acronyme de l'anglais *Molded Interconnect Device*).

Les circuits 28a, 28b peuvent être réalisés par exemple par une technique choisie parmi l'impression d'une encre résistive ou conductrice et la métallisation sélective.

L'encre peut être imprimée par impression jet d'encre par exemple.

La métallisation sélective peut être réalisée par injection bi-matière, d'une première matière électroconductrice et résistive et d'une seconde matière non électroconductrice, dans un moule de fabrication de la coque. On comprend que la première matière formera les pistes 30, 30' et les bornes 32, 34 et la seconde matière formera une demi-coque.

En variante, la première matière pourrait ne pas être conductrice mais comprendre seulement un additif (tels que des germes de Cuivre) facilitant l'accrochage des circuits 28a, 28b.

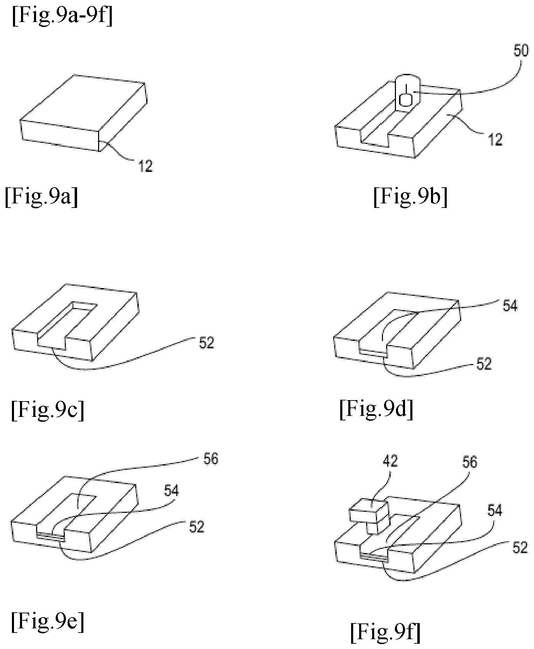

En variante, la métallisation sélective peut être réalisée par la technologie LDS (gravure directe par laser ou Laser Direct Structuring en anglais) qui est une des technologies de MID qui permet de produire des pistes sur des pièces injectées complexes. Les demi-coques sont fabriquées à partir d'une matière incorporant un additif organométallique (figure 9a). Ensuite, un faisceau laser 50 grave directement les pistes pour activer la matière grâce à un procédé physicochimique entre l'additif et le laser (figure 9b). Pour les circuits fins, la métallisation est réalisée par dépôt non-électrolytique. Une fois cette matière activée, la coque est plongée dans différents bains contenant des ions de métal (cuivre, après nickel, puis or) pour réaliser plusieurs dépôts successifs 52, 54, 56 de métal dans la zone activée (figures 9c-9e). Les couches successives sont par exemple du type Cu/Ni/Au, Cu/Ni/Ag, Cu/Ni/(Pd/Au), Ni/Pd/Au, Cu/Ni, Cu/Sn, etc. La dernière étape consiste à souder les fils ou fixer les cosses comme évoqué dans ce qui précède (figure 9f).

Les épaisseurs des couches métalliques sont par exemple ;
- Cu = 15 µm max (de préférence, entre 4 et 10 µm)
- Ni = 20 µm max (de préférence, inférieure à 15 µm)
- Au = 1 µm max (normalement, 0.1µm avec tolérance de ± 0.05µm)

Les couches relativement épaisses (supérieures à 15µm dans le cas de cuivre) sont fabriquées par dépôt électrolytique, i.e. galvanoplastie.

Les polymères métallisables sont des polymères thermoplastiques, polymères à cristaux liquides (LCP en anglais), certaines résines thermodurcissables et certains élastomères réticulés. Pour les applications qui nécessitent une résistance à des hautes températures (110-150°C), les thermoplastiques de type PA et PPA, PPS sont préférables.

Un polymère compatible avec LDS comprend en général un additif apte à produire des germes à la surface de la coque en étant activée par laser. Il peut s'agir d'un oxyde cuivre-chrome (CuO·Cr₂O₃) ou d'un complexe organique de Cu ou de Pd. Généralement, un polymère de ce type comprend entre 1 et 15% en poids d'additif LDS, le reste étant formé par la matrice polymère et d'éventuelles charges renforçantes.

Plusieurs matériaux sont actuellement disponibles sur le marché pour des applications LDS, parmi lesquels le matériau TECACOMP^{®} PEEK LDS black 3980 commercialisé par la société Ensinger, et le matériau Preperm 260 LDS (PPE) commercialisé par la société Premix.

Il existe également des peintures métallisables. La peinture est pulvérisée sur un polymère conventionnel (sans additif LDS) pour le rendre métallisable.

Un autre type de métallisation est la métallisation appelée injection bi-matière (Two Shot Molding ou 2K Molding en anglais). La pièce plastique est moulée en deux injections successives, par un matériau métallisable et un matériau classique. Le premier plastique est traité à l'aide d'un mordant chimique (tel qu'un acide de chrome ou hydroxyde de potassium), puis le circuit est déposé par voie liquide similaire à la technique LDS (dépôt non-électrolytique préféré). Les métaux utilisés, l'épaisseur du circuit fabriqué et le contrôle du procédé sont similaires à ceux de la technique LDS.

Ces technologies de plastronique permettent de rapporter la fonction de chauffage directement sur la coque en diminuant le nombre de composants (fils) ce qui abaisse le coût surtout celui de main d'oeuvre.

Il y a d'autres techniques de métallisation sélective, comme celles connues sous les dénominations anglo saxonnes Hot Embossing ou Plasmacoat 3D^{®}. La première technique peut mettre en forme des motifs métalliques par estampilage sur des polymères avec une faible température de transition vitreuse (Tg). Quant à Plasmacoat 3D^{®}, Il s'agit de la pulvérisation d'un métal au travers d'une torche de plasma. Cette méthode permettant de déposer des motifs métalliques en cuivre ou zinc par exemple.

Pour la réalisation d'une coque chauffante 10 selon le mode de réalisation des figures 10 et suivantes, l'étape de fabrication *in situ* des circuits est suivie d'une étape d'enrobage de chaque demi-coque avec le revêtement d'étanchéité 60. Ce revêtement est réalisé par injection du matériau diélectrique dans un moule à l'intérieur duquel est préalablement disposée chaque demi-coque, comme évoqué dans ce qui précède.

## Revendications

1. Coque (10) chauffante pour raccord trois voies (12), en particulier pour un circuit de fluide de véhicule automobile, cette coque ayant une forme générale en T ou Y et comportant un passage interne (14) de même forme dans lequel est destiné à être logé un raccord fluidique trois voies, la coque étant formée par deux demi-coques (10a, 10b) de même forme fixées l'une à l'autre et délimitant entre elles ledit passage, les demi-coques comportant des surfaces semi-cylindriques (22, 24, 26) formant des portions du passage, **caractérisée en ce qu'**elle comprend des circuits résistifs de chauffage (28a, 28b) qui sont formés *in situ* sur lesdites surfaces semi-cylindriques.

2. Coque (10) selon la revendication 1, dans laquelle chaque circuit (28a, 28b) comprend au moins une piste résistive (30, 30') de forme allongée dont les extrémités longitudinales sont reliées à des bornes (32, 34) de raccordement électrique.

3. Coque (10) selon la revendication 2, dans laquelle la piste résistive (30) forme un serpentin.

4. Coque (10) selon l'une des revendications précédentes, dans laquelle les bornes (32, 34) ou cosses (36) s'étendent depuis ledit passage, au moins en partie à l'extérieur de ce passage (14).

5. Coque (10) selon l'une des revendications 1 à 3, dans laquelle les bornes (32, 34) ou cosses (36) sont entièrement situées à l'extérieur dudit passage (14).

6. Coque (10) selon la revendication 2 ou 3, dans laquelle chaque demi-coque (10a, 10b) comporte au moins une, et de préférence au moins deux, circuit(s) résistif(s) de chauffage (28a, 28b) dont les bornes de raccordement (32, 34) sont indépendantes.

7. Coque (10) selon l'une des revendications précédentes, dans laquelle chaque demi-coque (10a, 10b) comprend trois surfaces semi-cylindriques (22, 24, 26), un premier circuit résistif de chauffage (28a) s'étendant sur des première et seconde des surfaces semi-cylindriques (22, 26), et un second circuit résistif de chauffage (28b) s'étendant sur la seconde et une troisième des surfaces semi-cylindriques (26, 24).

8. Coque (10) selon la revendication précédente, en dépendance de la revendication 4, dans laquelle une borne de raccordement (32, 34) est située sur chacune des première et troisième surfaces (22, 24) en vue du raccordement électrique des extrémités des pistes (30, 30') des premier et second circuits (28a, 28b) situés sur ces surfaces, et deux bornes de raccordement sont situées sur ladite seconde surface (24) en vue du raccordement électrique des extrémités des pistes (30, 30') des premier et second circuits (28a, 28b) situés sur cette surface.

9. Coque (10) selon la revendication 7, en dépendance de la revendication 5, dans laquelle les bornes de raccordement (32, 34) sont reliées aux pistes (30, 30') par des extensions (23) de ces pistes qui s'étendent à l'extérieur desdites surfaces semi-cylindriques (22, 24, 26).

10. Coque (10) selon la revendication 7 ou 9, dans laquelle les bornes de raccordement (32, 34) sont situées sur deux faces parallèles opposées de pattes (62) de chaque demi-coque (10a, 10b).

11. Coque (10) selon l'une des revendications précédentes, dans laquelle chaque demi-coque (10a, 10b) est enrobée par un revêtement d'étanchéité (60) en matériau diélectrique, qui recouvre au moins partiellement lesdits circuits (28a, 28b).

12. Coque (10) selon la revendication 11, dans laquelle ledit revêtement (60) forme des manchons tubulaires (66) autour de chacune desdites bornes (32, 34).

13. Coque (10) selon la revendication 11 ou 12, dans laquelle chaque demi-coque (10a, 10b) comporte au moins un élément en saillie (64) configuré pour coopérer avec une paroi d'un moule pour garantir un positionnement de la demi-coque lors d'une injection du matériau diélectrique dans le moule.

14. Circuit de fluide, en particulier pour un véhicule automobile, comportant au moins une coque (10) selon l'une des revendications précédentes.

15. Procédé de fabrication d'une coque selon l'une des revendications 1 à 12, dans lequel il comprend une étape (a) de réalisation des circuits (28a, 28b) par une technique choisie parmi l'impression d'une encre résistive ou conductrice et la métallisation sélective.

16. Procédé selon la revendication 15, dans lequel la métallisation sélective est réalisée par laser puis immersion dans un ou plusieurs bains de métallisation.

17. Procédé selon la revendication 15, dans lequel le matériau de la coque comporte un additif destiné à être activé par laser et à faciliter l'accroche d'une ou plusieurs couches de métal lors de l'immersion ou des immersions successives.

18. Procédé selon la revendication 15 ou 16, dans lequel la coque est réalisée par injection bi-matière dans un moule, d'une première matière ayant une affinité avec un matériau électroconducteur et résistif, et d'une seconde matière non électroconductrice.

## Patentansprüche

1. Dreiwege (12)-Heizschale (10), insbesondere für einen Fluidkreislauf eines Automobilfahrzeugs, wobei diese Schale eine allgemeine T- oder Y-förmige Form aufweist und einen inneren Durchgang (14) gleicher Form umfasst, in dem ein Dreiwege-Fluidanschluss dazu vorgesehen ist, aufgenommen zu werden, wobei die Schale von zwei Halbschalen (10a, 10b) gleicher Form gebildet ist, die aneinander befestigt sind und untereinander den Durchgang begrenzen, wobei die Halbschalen halbzylindrische Oberflächen (22, 24, 26) umfassen, die Durchgangsabschnitte bilden, **dadurch gekennzeichnet, dass** sie resistente Heizkreisläufe (28a, 28b) umfasst, die in situ auf den halbzylindrischen Oberflächen gebildet sind.

2. Schale (10) nach Anspruch 1, wobei jeder Kreislauf (28a, 28b) mindestens eine resistente Spur (30, 30') länglicher Form umfasst, bei der die Längsenden mit elektrischen Verbindungsanschlüssen (32, 34) verbunden sind.

3. Schale (10) nach Anspruch 2, wobei die resistente Spur (30) eine Rohrschlange bildet.

4. Schale (10) nach einem der vorstehenden Ansprüche, wobei sich die Anschlüsse (32, 34) oder Hülsen (36) ausgehend von dem Durchgang mindestens teilweise auf der Außenseite dieses Durchgangs (14) erstrecken.

5. Schale (10) nach einem der Ansprüche 1 bis 3, wobei sich die Anschlüsse (32, 34) oder Hülsen (36) vollständig auf der Außenseite des Durchgangs (14) befinden.

6. Schale (10) nach Anspruch 2 oder 3, wobei jede Halbschale (10a, 10b) mindestens einen, und vorzugsweise mindestens zwei, resistente(n) Heizkreislauf/Heizkreisläufe (28a, 28b) umfasst, bei dem/denen die Verbindungsanschlüsse (32, 34) unabhängig sind.

7. Schale (10) nach einem der vorstehenden Ansprüche, wobei jede Halbschale (10a, 10b) mindestens drei halbzylindrische Oberflächen (22, 24, 26) umfasst, einen ersten resistenten Heizkreislauf (28a), der sich auf einer ersten und einer zweiten der halbzylindrischen Oberflächen (22, 26) erstreckt, und einen zweiten resistenten Heizkreislauf (28b), der sich auf der zweiten und einer dritten der halbzylindrischen Oberflächen (26, 24) erstreckt.

8. Schale (10) nach dem vorstehenden Anspruch in Abhängigkeit von Anspruch 4, wobei sich auf jeder der ersten und der dritten Oberfläche (22, 24) für den elektrischen Anschluss der Enden der Spuren (30, 30') des ersten und des zweiten Kreislaufs (28a, 28b), die sich auf diesen Oberflächen befinden, ein Verbindungsanschluss (32, 34) befindet, und sich auf der zweiten Oberfläche (24) für den elektrischen Anschluss der Enden der Spuren (30, 30') des ersten und des zweiten Kreislaufs (28a, 28b), die sich auf dieser Oberfläche befinden, zwei Verbindungsanschlüsse befinden.

9. Schale (10) nach Anspruch 7 in Abhängigkeit von Anspruch 5, wobei die Verbindungsanschlüsse (32, 34) mit den Spuren (30, 30') über Verlängerungen (23) dieser Spuren verbunden sind, die sich auf der Außenseite der halbzylindrischen Oberflächen (22, 24, 26) erstrecken.

10. Schale (10) nach Anspruch 7 oder 9 wobei sich die Verbindungsanschlüsse (32, 34) auf zwei gegenüberliegenden parallelen Seiten von Laschen (62) jeder Halbschale (10a, 10b) befinden.

11. Schale (10) nach einem der vorstehenden Ansprüche, wobei jede Halbschale (10a, 10b) von einer Dichtungsverkleidung (60) aus dielektrischem Material umschlossen ist, die die Kreisläufe (28a, 28b) zumindest teilweise abdeckt.

12. Schale (10) nach Anspruch 11, wobei die Verkleidung (60) rohrförmige Muffen (66) um jeden der Anschlüsse (32, 34) bildet.

13. Schale (10) nach Anspruch 11 oder 12, wobei jede Halbschale (10a, 10b) mindestens ein vorstehendes Element (64) umfasst, das konfiguriert ist, um mit einer Wand einer Gussform zusammenzuwirken, um eine Positionierung der Halbschale bei einer Einspritzung des dielektrischen Materials in die Gussform zu gewährleisten.

14. Fluidkreislauf, insbesondere für ein Automobilfahrzeug, umfassend mindestens eine Schale (10) nach einem der vorstehenden Ansprüche.

15. Verfahren zur Herstellung einer Schale nach einem der Ansprüche 1 bis 12, wobei es einen Schritt (a) der Herstellung der Kreisläufe (28a, 28b) durch eine Technik umfasst, die aus dem Druck einer resistenten oder leitenden Tinte und der selektiven Metallisierung ausgewählt ist.

16. Verfahren nach Anspruch 15, wobei die selektive Metallisierung durch Laser, dann Eintauchen in ein oder mehrere Metallisierungsbäder erreicht wird.

17. Verfahren nach Anspruch 15, wobei das Material der Schale ein Zusatzmittel umfasst, das dazu vorgesehen ist, durch Laser aktiviert zu werden und das Haften einer oder mehrerer Metalllagen bei dem Eintauchen oder den aufeinanderfolgenden Eintauchvorgänge zu erleichtern.

18. Verfahren nach Anspruch 15 oder 16, wobei die Schale durch Injektion zweier Werkstoffe in eine Gussform erreicht wird, eines ersten Werkstoffs, der eine Affinität mit einem elektrisch leitenden und resistenten Material aufweist, und eines zweiten Werkstoffs, der nicht elektrisch leitend ist.

## Claims

1. A heating shell (10) for three-way connector (12), in particular for a motor vehicle fluid circuit, this shell having a general T or Y shape and comprising an internal passage (14) of the same shape in which a three-way fluidic connector is intended to be housed, the shell being formed by two half-shells (10a, 10b) of the same shape attached to each other and delimiting said passage between them, the half-shells comprising semi-cylindrical surfaces (22, 24, 26) forming segments of the passage, **characterised in that** it comprises resistive heating circuits (28a, 28b) which are formed *in situ* on said semi-cylindrical surfaces.

2. The shell (10) according to claim 1, wherein each circuit (28a, 28b) comprises at least one elongated resistive track (30, 30') whose longitudinal ends are connected to electric connecting terminals (32, 34).

3. The shell (10) of claim 2, wherein the resistive track (30) forms a serpentine.

4. The shell (10) according to any of the preceding claims, wherein the terminals (32, 34) or lugs (36) extend from said passage, at least partly, outside this passage (14).

5. The shell (10) according to any of claims 1 to 3, wherein the terminals (32, 34) or lugs (36) are located entirely outside said passage (14).

6. The shell (10) according to claim 2 or 3, wherein each half-shell (10a, 10b) comprises at least one, and preferably at least two, resistive heating circuits (28a, 28b) whose connecting terminals (32, 34) are independent.

7. The shell (10) according to any of the preceding claims, wherein each half-shell (10a, 10b) comprises three semi-cylindrical surfaces (22, 24, 26), a first resistive heating circuit (28a) extending over first and second of the semi-cylindrical surfaces (22, 26), and a second resistive heating circuit (28b) extending over the second and a third of the semi-cylindrical surfaces (26, 24).

8. The shell (10) according to the preceding claim, in dependence on claim 4, wherein one connecting terminal (32, 34) is located on each of the first and third surfaces (22, 24) for electric connection of the ends of the tracks (30, 30') of the first and second circuits (28a, 28b) located on these surfaces, and two connecting terminals are located on said second surface (24) for electric connection of the ends of the tracks (30, 30') of the first and second circuits (28a, 28b) located on this surface.

9. The shell (10) according to claim 7, in dependence on claim 5, wherein the connecting terminals (32, 34) are connected to the tracks (30, 30') by extensions (23) of these tracks which extend outside said semi-cylindrical surfaces (22, 24, 26).

10. The shell (10) according to claim 7 or 9, wherein the connecting terminals (32, 34) are located on two opposite parallel faces of tabs (62) of each half-shell (10a, 10b).

11. The shell (10) according to any of the preceding claims, wherein each half-shell (10a, 10b) is coated with a sealing coating (60) of dielectric material, which at least partially covers said circuits (28a, 28b).

12. The shell (10) according to claim 11, wherein said coating (60) forms tubular sleeves (66) around each of said terminals (32, 34).

13. The shell (10) according to claim 11 or 12, wherein each half-shell (10a, 10b) comprises at least one protruding element (64) configured to cooperate with a wall of a mould to ensure a positioning of the half-shell upon an injection of the dielectric material into the mould.

14. A fluid circuit, in particular for a motor vehicle, comprising at least one shell (10) according to one of the preceding claims.

15. A method for manufacturing a shell according to any of claims 1 to 12, wherein it comprises a step (a) of realizing the circuits (28a, 28b) by a technique selected from printing a resistive or conductive ink and the selective metallization.

16. The method of claim 15, wherein the selective metallization is produced by laser followed by immersion in one or more metallization baths.

17. The method of claim 15, wherein the material of the shell comprises an additive intended to be laser activated and to facilitate the hooking of one or more metal layers upon the immersion or successive immersions.

18. The method according to claim 15 or 16, wherein the shell is produced by two-material injection into a mould, of a first material having an affinity for an electrically conductive and resistive material, and of a second non-electrically conductive material.
